# FASCICULE DE BREVET EUROPEEN

(11) **EP 2 861 434 B1**
(45) Date de publication et mention de la délivrance du brevet: **24.08.2016**
(21) Numéro de dépôt: 13728204.2
(22) Date de dépôt: 13.06.2013
(51) Int. Cl.: B60C 15/00, C08L 7/00, C08L 9/00, C08L 71/02

(54) **PNEUMATIQUE POUR VEHICULE A FORTE CHARGE**
REIFEN FÜR EINEN LKW
TIRE FOR A HEAVY DUTY VEHICLE

(30) Priorité: 18.06.2012 FR 1255671
(43) Date de publication de la demande: 22.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LAGARDE, Patricia, F-63040 Clermont-Ferrand Cedex 9 (FR); LAVIALLE, David, F-63040 Clermont-Ferrand Cedex 9 (FR)
(74) Mandataire: Gandon-Pain, Sylvie
(86) Numéro de dépôt international: PCT/EP2013/062220
(87) Numéro de publication internationale: WO 2013/189820

(56) Documents cités:
- WO-A1-02/096674
- FR-A1- 2 940 187
- FR-A1- 2 968 601
- DATABASE WPI Week 200938 Thomson Scientific, London, GB; AN 2009-J68758 XP002686298, & JP 2009 114385 A (SUMITOMO RUBBER IND LTD) 28 mai 2009 (2009-05-28)

## Description

L'invention concerne un pneumatique, en particulier destiné à porter de lourdes charges, tel qu'un pneumatique destiné à équiper des véhicules comme les poids lourds, les véhicules de génie civil.

Un pneumatique comporte usuellement deux bourrelets (en anglais désigné par le terme « bead ») destinés à entrer en contact avec une jante, un sommet surmonté d'une bande de roulement destinée à entrer en contact avec le sol et des flancs reliant ce sommet à chaque bourrelet. Par ailleurs, un pneumatique est généralement renforcé par une armature de carcasse, l'armature de carcasse étant ancrée dans chaque bourrelet à un élément circonférentiel de renforcement de bourrelet.

On entend par section méridienne une coupe par un plan méridien passant par l'axe de rotation du pneumatique.

Chaque bourrelet comporte au moins un insert annulaire interne dont la section méridienne est de forme générale allongée et qui présente des faces se joignant en une pointe ou extrémité (dite encore apex) qui est située radialement à l'extérieur de l'élément circonférentiel de renforcement de bourrelet. On entend par insert annulaire interne un insert annulaire qui ne présente pas de face visible lorsque le pneumatique n'est pas monté sur une jante externe, et qui n'entre pas en contact direct avec la jante. Ces inserts annulaires de bourrelet sont constitués de compositions à base de caoutchouc.

Les pneumatiques destinés à équiper des véhicules portant de lourdes charges à des vitesses plus ou moins élevées, tels que les poids lourds, les véhicules de génie civil, sont conçus pour pouvoir être rechapés lorsque la bande de roulement est usée. La possibilité de rechaper implique de disposer d'un pneumatique usé n'ayant pas subi de dommages importants, comme des fissures dans les semi-finis qui composent le pneumatique. A cette fin, il est souhaitable que la cohésion des matériaux formant les inserts annulaires internes soit la plus élevée possible pour éviter ou réduire le risque de formation d'amorces de fissure qui pourraient se propager jusqu'à la surface externe du pneumatique (sachant que la surface externe du pneu désigne toute surface visible du pneumatique à l'observateur lorsque ce pneumatique n'est pas monté sur sa jante).

Mais il est connu de l'homme du métier que les inserts annulaires internes subissent des déformations à chaque tour de roue. Ces déformations génèrent un échauffement élevé des matériaux composant ces inserts qui accélère leur vieillissement thermochimique ou thermo-oxydant. Ce vieillissement a pour effet de diminuer la cohésion des inserts annulaires internes, ce qui se traduit par une moins bonne endurance du pneumatique.

Afin de conférer la meilleure endurance possible au pneumatique, l'insert annulaire interne doit présenter un niveau de cohésion suffisant à l'initial et le moins évolutif possible avec l'usage.

Pour augmenter la cohésion d'un insert annulaire interne, une solution consiste à augmenter le taux de charge renforçante de la composition de caoutchouc qui forme l'insert annulaire interne. Mais cette augmentation du taux de charge renforçante rend la composition de caoutchouc plus hystérétique, ce qui se traduit par un échauffement de l'insert annulaire interne qui conduit à une pénalisation de l'endurance du pneumatique.

Ainsi a-t-il été proposé d'utiliser des compositions de caoutchouc relativement peu hystérétiques comprenant de faibles taux de charges renforçantes pour la réalisation d'insert annulaire interne, comme cela est décrit par exemple dans le brevet US 3,392,773 et le brevet EP 1 028 007. Notamment le brevet EP 1 028 007 enseigne que le taux de charge inorganique renforçante dans la composition de caoutchouc d'un insert annulaire interne d'un pneumatique ne doit pas dépasser 40 pce, et préférentiellement ne pas être supérieur à 35 pce, pour que la composition de caoutchouc présente un compromis optimisé entre la cohésion et l'hystérèse en vue d'améliorer l'endurance du pneumatique.

Même si l'endurance du pneumatique est améliorée par cette solution, il existe toujours un besoin de trouver d'autres solutions pour améliorer encore davantage l'endurance des pneumatiques. Notamment il est une préoccupation constante pour les manufacturiers de trouver une composition de caoutchouc pour de tels inserts annulaires internes qui satisfasse à un compromis cohésion hystérèse permettant d'améliorer encore l'endurance de pneumatique, en particulier portant de lourdes charges.

Les Demanderesses poursuivant leurs recherches, ont découvert que l'utilisation d'une composition spécifique de caoutchouc dans un insert annulaire interne localisé dans le bourrelet du pneumatique, en particulier ceux ayant un apex radialement à l'extérieur de l'élément circonférentiel de renforcement de bourrelet, permettait d'améliorer fortement l'endurance d'un pneumatique, en particulier destiné à porter de lourdes charges. Cette composition de caoutchouc comprend au moins une matrice élastomère qui est à base d'au moins un polyisoprène à majorité d'enchaînement 1,4-cis, entre 45 et 60 partie pour cent parties en poids d'élastomère, pce, d'une charge renforçante comprenant de 43 à 55 pce d'une charge inorganique renforçante de surface spécifique BET comprise entre 155 et 185 m²/g, un agent de couplage pour lier la charge inorganique renforçante à l'élastomère et un système de vulcanisation.

Ainsi l'objet de l'invention est un pneumatique comprenant :
- deux bourrelets destinés à entrer en contact avec une jante,
- une armature de carcasse (1) ancrée dans chaque bourrelet à un élément circonférentiel de renforcement (2) de bourrelet,
- chaque bourrelet comportant au moins un insert annulaire interne , caractérisé en ce que cet insert annulaire interne est constitué d'une composition de caoutchouc comprenant :
   ∘ une matrice élastomère à base d'au moins un polyisoprène à majorité d'enchaînement 1,4-cis,
   ∘ entre 45 et 60 pce d'une charge renforçante comprenant de 43 à 55 pce d'une charge inorganique renforçante de surface spécifique BET comprise entre 155 et 185 m²/g,
   ∘ un agent de couplage pour lier la charge inorganique renforçante à l'élastomère
   ∘ et un système de vulcanisation.

Préférentiellement l'invention concerne un pneumatique tel que défini ci-dessus dans lequel l'insert annulaire interne présente une section méridienne de forme générale allongée et présente des faces se joignant en une pointe ou extrémité (dite encore apex) qui est située radialement à l'extérieur de l'élément circonférentiel (2) de renforcement de bourrelet.

Préférentiellement aussi l'invention concerne un pneumatique tel que défini ci-dessus dans lequel l'insert annulaire interne est une gomme de bordure qui est sous forme de ruban et qui est positionnée au contact d'une extrémité d'une armature de renforcement de façon à couvrir cette extrémité.

Préférentiellement aussi l'invention concerne un pneumatique tel que défini ci-dessus dans lequel le taux de la charge renforçante est compris entre 45 et 55 pce.

Préférentiellement également l'invention concerne un pneumatique tel que défini ci-dessus dans lequel le taux de la charge inorganique renforçante est compris dans un domaine allant de 45 à 50 pce.

Préférentiellement également l'invention concerne un pneumatique tel que défini ci-dessus dans lequel la surface spécifique BET de la charge inorganique renforçante est comprise dans un domaine allant de 160 à 180 m²/g.

Plus préférentiellement l'invention concerne un pneumatique tel que défini ci-dessus dans lequel la charge inorganique renforçante est une silice.

Plus préférentiellement également l'invention concerne un pneumatique tel que défini ci-dessus dans lequel la charge renforçante consiste en un mélange de noir de carbone et de silice.

De manière préférentielle l'invention concerne un pneumatique tel que défini ci-dessus dans lequel 7 le noir de carbone est présent à un taux inférieur à 10 pce, préférentiellement inférieur à 6 pce.

De manière également préférentielle l'invention concerne un pneumatique tel que défini ci-dessus dans lequel la matrice élastomère contient une fraction massique majoritaire de polyisoprène.

De manière plus préférentielle l'invention concerne un pneumatique tel que défini ci-dessus dans lequel la matrice élastomère contient uniquement du polyisoprène.

Préférentiellement l'invention concerne un pneumatique tel que défini ci-dessus dans lequel le polyisoprène est choisi dans le groupe constitué par le caoutchouc naturel, un polyisoprène de synthèse ayant un taux de liaisons cis-1,4 supérieur à 90% des motifs isoprène, plus préférentiellement encore supérieur à 98%, et le mélange de ces polyisoprènes.

Plus préférentiellement l'invention concerne un pneumatique tel que défini ci-dessus dans lequel la composition de caoutchouc comprend en outre un agent de recouvrement de la charge inorganique.

### I. MESURES ET TESTS UTILISES

La surface spécifique BET est déterminée selon la norme ISO 4652 (dernière version de 1994).

La surface spécifique CTAB est déterminée selon la norme standard française NF T 45-007 de Novembre 1987 (méthode B, maintenant norme ISO 5794-1, version de juin 2010 et ISO 5794-2, version février 2006).

L'endurance des pneumatiques est évaluée par un test de roulage qui consiste à mesurer la distance parcourue en kilomètres jusqu'à l'apparition de fissure visible en surface dans la zone de bourrelet du pneumatique, le pneu étant gonflé à l'azote, soumis à une charge 1.75 fois la charge nominale et roulant à 30km/h.

Le résultat est exprimé par le rapport de la distance parcourue par un pneumatique conforme à l'invention sur celle d'un pneumatique témoin. Le témoin ayant un indice 100, une valeur supérieure à 100 indique que la composition considérée présente une meilleure endurance que la composition prise comme témoin.

### II- DESCRIPTION DETAILLEE DE L'INVENTION

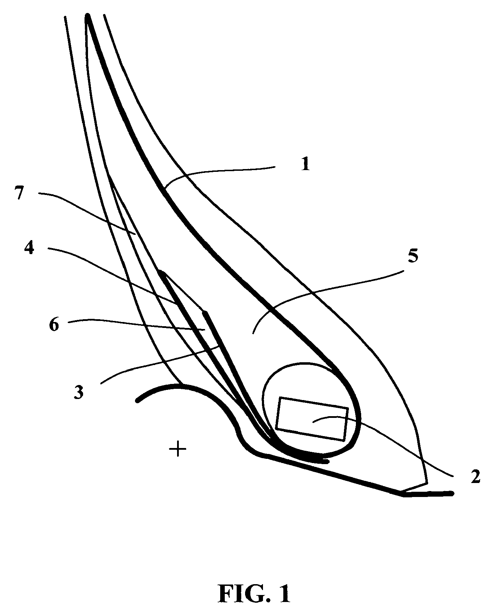

La figure 1 illustre un mode de réalisation particulier de l'invention, en ce qu'elle représente schématiquement dans sa coupe méridienne un bourrelet de pneumatique de véhicule poids lourd renforcé par un élément circonférentiel de renforcement (2) qui se présente sous la forme d'une tringle autour de laquelle s'enroule une armature de carcasse (1) pour former un retournement (3) disposé axialement vers l'extérieur de l'armature de carcasse. Ce bourrelet comprend en outre axialement vers l'extérieur du retournement de carcasse, une armature additionnelle de renforcement (4).
Le bourrelet comprend aussi :
- un insert annulaire interne (5) localisé axialement entre le retournement (3) et l'armature de carcasse (1),
- un insert annulaire interne (6) localisé axialement entre le retournement (3) et l'armature additionnelle de renforcement (4),
- un insert annulaire interne (7) localisé axialement à l'extérieur de l'armature additionnelle de renforcement (4).

Les inserts annulaires internes (5), (6) et (7) présentent tous une section méridienne de forme générale allongée et se terminent par une extrémité (apex) positionnée radialement à l'extérieur de l'élément circonférentiel de renforcement (2) de bourrelet.

Selon un mode de réalisation de l'invention, au moins un des inserts annulaires internes qui est localisé dans le bourrelet du pneumatique est positionné au contact d'une extrémité d'une armature de renforcement de façon à couvrir cette extrémité. Un tel insert annulaire interne est appelé gomme de bordure (« edge gum »). Cette gomme de bordure est un mélange caoutchouteux sous forme de ruban, c'est à dire un élément plat d'épaisseur constante. Elle est généralement sous forme calandrée. Elle peut couvrir l'extrémité de l'armature de carcasse (1) ou l'armature additionnelle de renforcement (4). Ainsi protège-t-elle les autres mélanges caoutchouteux localisés dans le bourrelet tels que les autres inserts annulaires internes (5), (6) et (7), qui environnent l'extrémité d'une armature de renforcement, de toute agression par un fil de renforcement de cette armature de renforcement. Le fil de renforcement de l'armature de renforcement, textile ou métallique, susceptible de renforcer un mélange caoutchouteux peut prendre toute forme connue et peut se présenter par exemple sous la forme d'un monofilament élémentaire, d'une fibre multifilamentaire, d'un câblé ou d'un retors obtenus par des opérations de câblage ou de retordage de monofilament ou de fibres multifilamentaires. Cette protection des inserts annulaires internes (5), (6) et (7) par une gomme de bordure selon la présente invention, permet d'augmenter l'endurance du pneumatique.

Selon un autre mode de réalisation de la présente invention, au moins un des inserts annulaires internes dont la section méridienne est de forme générale allongée, qui sont localisés dans le bourrelet du pneumatique et qui ont un apex situé radialement à l'extérieur de l'élément circonférentiel de renforcement de bourrelet, comme par exemple les inserts annulaires (5), (6) et (7) du mode de réalisation particulier décrit dans la figure 1, est constitué d'une composition de caoutchouc comprenant une matrice élastomère à base d'au moins un polyisoprène à majorité d'enchaînement 1,4-cis, entre 45 et 60 pce d'une charge renforçante comprenant de 43 à 55 pce d'une charge inorganique renforçante de surface spécifique BET comprise entre 155 et 185 m²/g, et un agent de couplage pour lier la charge inorganique renforçante à l'élastomère.

Selon un mode de réalisation préférentiel de l'invention, les deux bourrelets du pneumatique conforme à l'invention comprennent chacun trois inserts annulaires internes, respectivement l'insert annulaire interne (5) localisé axialement entre le retournement (3) et l'armature de carcasse (1), l'insert annulaire interne (6) localisé axialement entre le retournement (3) et l'armature additionnelle de renforcement (4), et l'insert annulaire interne (7) localisé axialement à l'extérieur de l'armature additionnelle de renforcement (4), chacun de ces inserts annulaires internes étant constitué de la composition de caoutchouc définie dans le paragraphe précédent.

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Elastomère diénique

Une caractéristique essentielle du pneumatique conforme à l'invention est que la matrice élastomère de la composition de caoutchouc constituant l'insert annulaire interne tel que défini dans la revendication 1, comprend un élastomère polyisoprène choisi dans le groupe constitué par du caoutchouc naturel, un polyisoprène de synthèse à majorité d'enchaînement 1,4-cis et leur mélange.

Le polyisoprène de synthèse à majorité d'enchaînement 1,4-cis présente un taux (% molaire) de liaisons cis-1,4 supérieur à 90%, encore plus préférentiellement supérieur à 98%. De tels polyisoprènes peuvent être synthétisés par polymérisation stéréospécifique utilisant des amorceurs de type Ziegler Natta, comme par exemple cela est décrit dans le brevet EP 1 355 960 B1.

Selon une variante du mode de réalisation où l'élastomère polyisoprène est un mélange de caoutchouc naturel et de polyisoprène de synthèse à majorité d'enchaînement 1,4-cis, la part de caoutchouc naturel dans ce mélange représente préférentiellement plus de 50%. Plus préférentiellement elle est de 100%.

Selon une autre variante du mode de réalisation où l'élastomère polyisoprène est un mélange de caoutchouc naturel et de polyisoprène de synthèse à majorité d'enchaînement 1,4-cis, la part de polyisoprène de synthèse dans ce mélange est préférentiellement d'au moins 50%, encore plus préférentiellement elle est de 100%.

Selon un mode de réalisation particulier, la matrice élastomère peut comprendre en outre un autre élastomère diénique.

Par élastomère "diénique", doit être compris de manière connue un (on entend un ou plusieurs) élastomère constitué au moins en partie (i.e., un homopolymère ou un copolymère) d'unités issues de monomères diènes (monomères porteurs de deux doubles liaisons carbone-carbone, conjuguées ou non).

Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Préférentiellement, l'élastomère diénique est choisi dans le groupe des élastomères diéniques fortement insaturés constitué par les polybutadiènes (en abrégé "BR"), les polyisoprènes (IR) de synthèse dont la teneur en enchaînement 1,4-cis n'est pas majoritaire dans lesdits polyisoprènes, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation préférentiel de l'invention, l'élastomère polyisoprène est l'élastomère majoritaire de la composition de caoutchouc de l'insert annulaire interne, c'est-à-dire la fraction pondérale de l'élastomère polyisoprène représente plus de 50% de la masse totale d'élastomère.

Selon un mode de réalisation davantage préférentiel, l'élastomère polyisoprène est le seul élastomère qui est utilisé dans la composition de caoutchouc de l'insert annulaire interne.

### II-2. Charge renforçante

Une autre caractéristique essentielle du pneumatique conforme à l'invention est que la composition de caoutchouc constituant l'insert annulaire interne tel que défini dans la revendication 1, comprend entre 45 et 60 pce d'une charge renforçante qui contient de 43 à 55 pce d'une charge inorganique renforçante de surface BET comprise entre 155 et 185 m²/g.

Selon un mode de réalisation particulier de l'invention, la charge inorganique renforçante représente au moins 85% en masse, plus préférentiellement au moins 90% en masse, de la charge renforçante.

La charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂).

La silice utilisée peut être toute silice renforçante connue de l'homme du métier, notamment toute silice précipitée ou pyrogénée. A titres de silices précipitées hautement dispersibles (dites "HDS"), on citera par exemple les silices « Ultrasil » 7000 et «Ultrasil» 7005 de la société Degussa, les silices « Zeosil » 1165MP, 1135MP et 1115MP de la société Rhodia, et la silice « Hi-Sil » EZ150G de la société PPG.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation particulier de l'invention, la charge renforçante comprend un noir de carbone.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Un noir de carbone de la série N300 est préféré, tel que le noir de carbone N330.

Selon un mode de réalisation préférentiel de l'invention, le taux de charge renforçante est compris entre 45 et 55 pce, plus préférentiellement il est supérieur à 45 pce et est d'au plus 50 pce.

Selon un mode de réalisation particulier de l'invention, le taux de charge inorganique est compris dans un domaine allant de 45 à 50 pce. De tels taux préférentiels permettent d'optimiser le compromis cohésion hystérèse de la composition de caoutchouc constituant l'insert annulaire interne tel que défini dans la revendication 1, et par suite d'améliorer l'endurance du pneumatique.

La silice est tout particulièrement préférée comme charge inorganique renforçante.

Selon un autre mode de réalisation particulier de l'invention, la surface BET de la charge inorganique renforçante est comprise dans un domaine allant de 160 à 180 m²/g.

Selon une variante de ce mode de réalisation particulier de l'invention, la charge inorganique est une silice qui présente préférentiellement une surface CTAB comprise entre 155 et 170 m²/g.

Le noir de carbone, lorsqu'il est présent, est utilisé de préférence à un taux inférieur à 20 pce, plus préférentiellement inférieur à 10 pce, encore plus préférentiellement inférieur à 6 pce (par exemple entre 0.5 et 6 pce).

### II-3. Les agents de couplage :

Une autre caractéristique essentielle du pneumatique conforme à l'invention est que la composition de caoutchouc constituant l'insert annulaire interne tel que défini dans la revendication 1, comprend un agent de couplage pour coupler la charge inorganique renforçante à l'élastomère diénique.

Pour coupler la charge inorganique renforçante à l'élastomère diénique, il est bien connu d'utiliser un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Cet agent de couplage (ou agent de liaison) est au moins un composé au moins bifonctionnel et est destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z - A - Sₓ - A - Z , dans laquelle:
   - x est un entier de 2 à 8 (de préférence de 2 à 5) ;
   - les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
   - les symboles Z, identiques ou différents, répondent à l'une des trois formules ci-après: 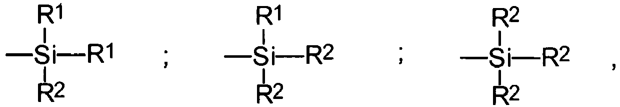 dans lesquelles:
      - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
      - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)Silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

La teneur en agent de couplage est avantageusement inférieure à 10 pce, étant entendu qu'il est en général souhaitable d'en utiliser le moins possible. Typiquement le taux d'agent de couplage représente préférentiellement de 0,5% à 15% en poids par rapport à la quantité de charge inorganique. Son taux est préférentiellement compris entre 0,5 et 8 pce, plus préférentiellement compris dans un domaine allant de 3 à 5 pce. Ce taux est aisément ajusté par l'homme du métier selon le taux de charge inorganique utilisé dans la composition de caoutchouc.

Selon un mode de réalisation particulier de l'invention où la charge inorganique renforçante est une silice, l'agent de couplage peut être apporté par la silice dont la surface a été au préalable modifiée par un organosilane, comme le tétrasulfure de bis(3-triéthoxysilylpropyl) ou mercaptosilanes. De telles silices sont commercialisées par Evonik et PPG sous les appellations respectives « Coupsil » et « Ciptane ».

### II.4- Système de vulcanisation

Une autre caractéristique essentielle du pneumatique conforme à l'invention est que la composition de caoutchouc constituant l'insert annulaire interne tel que défini dans la revendication 1, comprend un système de vulcanisation, c'est-à-dire un système à base de soufre (ou d'un agent donneur de soufre) et d'un accélérateur primaire de vulcanisation.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc, sulfénamides. Ces accélérateurs sont par exemple choisis dans le groupe constitué par disulfure de 2-mercaptobenzothiazyle (en abrégé "MBTS"), disulfure de 20 tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

Un accélérateur de la famille des sulfénamides tel que la CBS est préféré.

Le soufre est utilisé préférentiellement à un taux égal à ou supérieur à 1.8 pce. Dans le cas où un agent de donneur de soufre est utilisé à la place ou en conjonction avec du soufre, le taux de cet agent est ajusté de façon à ce que le taux de soufre total soit préférentiellement égal à ou supérieur à 1.8 pce.

Selon un mode de réalisation préférentiel, le taux de soufre est compris dans un domaine allant de 1.8 à 4 pce, plus préférentiellement de 2 à 3 pce.

L'accélérateur primaire de vulcanisation est utilisé préférentiellement à un taux compris entre 1 et 3 pce, encore plus préférentiellement compris entre 1 et 2 pce.

A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Selon un autre mode de réalisation particulier de l'invention, le taux d'oxyde de zinc est inférieur à 8 pce, plus préférentiellement inférieur à 6 pce.

### II-5. Additifs divers

La composition de caoutchouc peut comporter également tout ou partie des additifs usuels habituellement utilisés dans les compositions d'élastomères destinées à la fabrication de pneumatiques ou produits semi-finis pour pneumatiques, comme par exemple des plastifiants, des pigments, des agents de protection tels que agents anti-ozonants, anti-oxydants, des agents anti-fatigue, des agents anti-réversion, des résines renforçantes (tels que résorcinol ou bismaléimide), des accepteurs (par exemple résine phénolique novolaque) ou des donneurs de méthylène, par exemple l'hexaméthylènetétramine (HMT).

Selon un mode de réalisation particulier de l'invention, la composition de caoutchouc comprend, en complément d'un agent de couplage, un agent de recouvrement des charges inorganiques qui améliore la dispersion de la charge inorganique dans la matrice caoutchouc. Un tel mode de réalisation est préférentiel lorsque la charge inorganique renforçante n'est pas une silice dont la surface a été au préalable modifiée par un organosilane. L'agent de recouvrement peut être un silane hydrolysable tel qu'un alkylalkoxysilane, un polyol, notamment un polyalkylèneglycol tel qu'un polyéthylèneglycol, un polyéther, une amine, une guanidine telle que la diphénylguanidine, un polyorganosiloxane hydroxylé ou hydrolysable et leurs mélanges. Le taux de l'agent de recouvrement est facilement ajusté par l'homme du métier selon le taux de charge inorganique utilisé dans la composition de caoutchouc. Il est préférentiellement compris entre 0 et 3 pce, préférentiellement entre 0.2 et 3 pce, plus préférentiellement entre 0.5 et 3 pce.

### II- 6. Fabrication de la composition de caoutchouc et du pneumatique :

La composition de caoutchouc est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 20°C et 100°C, phase de finition au cours de laquelle est incorporé le système de vulcanisation.

La première étape de malaxage est généralement réalisée en incorporant la charge renforçante à l'élastomère en une ou plusieurs fois en malaxant thermomécaniquement.

Les deux premières étapes peuvent être réalisées de manière consécutive sur un même mélangeur ou être séparée par une étape de refroidissement à une température inférieure à 100°C, la dernière étape étant alors réalisée sur un deuxième mélangeur.

A titre d'exemple, la première phase est conduite en une seule étape thermomécanique au cours de laquelle on introduit, dans un mélangeur approprié tel qu'un mélangeur interne usuel, dans un premier temps tous les constituants de base nécessaires (l'élastomère en totalité ou en partie, la charge renforçante en totalité ou en partie et l'agent de couplage si nécessaire), puis dans un deuxième temps, par exemple après une à deux minutes de malaxage, le résiduel d'élastomère et de charge renforçante le cas échéant, les autres additifs, éventuels agents de recouvrement ou de mise en oeuvre complémentaires, à l'exception du système de vulcanisation. Après refroidissement du mélange ainsi obtenu, on incorpore alors dans un mélangeur externe tel qu'un mélangeur à cylindres, maintenu à basse température (par exemple entre 20°C et 100°C), le système de vulcanisation. L'ensemble est alors mélangé pendant quelques minutes, par exemple entre 2 et 15 min.

La composition finale ainsi obtenue est ensuite calandrée, par exemple sous la forme d'une feuille ou d'une plaque, notamment pour une caractérisation au laboratoire, ou encore extrudée, pour former un profilé en vue de son utilisation comme insert annulaire interne comme défini dans la revendication 1.

La vulcanisation est conduite de manière connue à une température généralement comprise entre 120°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les pneumatiques précédemment décrits tant à l'état cru (c'est à dire, avant cuisson) qu'à l'état cuit (c'est à dire, après réticulation ou vulcanisation).

Le pneumatique selon l'invention est préférentiellement un pneumatique pour porter des lourdes charges, notamment un pneumatique équipant des véhicules poids lourd ou des véhicules de génie civil.

Les exemples qui suivent illustrent l'invention, sans toutefois la limiter.

### III. EXEMPLES DE REALISATION DE L'INVENTION

### III-1 Préparation des compositions de caoutchouc

On procède pour les essais qui suivent de la manière suivante: on introduit dans un mélangeur interne, rempli à 70% et dont la température initiale de cuve est d'environ 50°C, le caoutchouc naturel, la silice, le polyéthylène glycol et le silane polysulfure supporté sur du noir de carbone, puis, après une à deux minutes de malaxage, les divers autres ingrédients comme l'antioxydant, l'acide stéarique et l'oxyde de zinc. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide) et l'hexaméthylènetétramine sur un mélangeur externe (homo-finisseur) à 30°C, en mélangeant le tout (phase productive) pendant environ 5 à 6 min.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées sous la forme d'articles utilisables directement, après découpage et/ou assemblage aux dimensions souhaitées, pour obtenir un profilé utilisable comme insert annulaire interne comme défini dans la revendication 1.

### III-2. Essais

Les essais ont pour but de montrer l'amélioration de l'endurance du pneumatique conforme à l'invention par rapport à un pneumatique non-conforme à l'invention.

Deux compositions C1 et C2 ont été fabriquées conformément au procédé décrit dans le paragraphe précédent. Ces compositions dont la formulation est détaillée dans le tableau 1 (où les quantités sont exprimées en pce), diffèrent notamment par leur taux de silice. La composition C1 conforme à l'invention comprend 45 pce d'une silice de surface spécifique BET égale à 160 m²/g, alors que la composition C2 témoin conforme à l'enseignement de l'art antérieur, comprend seulement 35 pce de la même silice. Les taux de silane sont en conséquence ajustés au taux de silice et sont respectivement de 4.5 pce pour C1 et de 3.5 pce pour C2.

Les compositions C1 et C2 ont été utilisées pour constituer les inserts annulaires internes (5), (6) et (7) des pneumatiques respectifs P1 et P2, chacun de dimension 315/60 R22.5. Hormis ces différences portant sur la composition de l'insert annulaire interne, les pneumatiques P1 et P2 sont identiques.

Le pneumatique P1 est conforme à l'invention, puisqu'il comporte un insert annulaire interne constitué de la composition C1. Le pneumatique P2 n'est pas conforme à l'invention.

### III-3. Résultats

La performance d'endurance des pneumatiques P1 et P2 figure dans le tableau 2.

De façon inattendue le pneumatique P1 conforme à l'invention avec un indice de performance de 150 présente une bien meilleure endurance que le pneumatique P2 témoin.

Ces résultats montrent que contrairement à l'enseignement de l'art antérieur incitant plutôt à ne pas dépasser 35 pce de silice, la composition de caoutchouc selon l'invention permet de façon inattendue d'offrir un compromis de propriété hystérèse cohésion qui se traduit par une forte amélioration de la performance de l'endurance du pneumatique.

En résumé, l'utilisation de composition de caoutchouc définie par un taux spécifique de charge renforçante et un taux spécifique de charge inorganique renforçante de surface BET donnée, dans un insert annulaire interne de bourrelet de pneumatique permet d'améliorer encore l'endurance du pneumatique, même par rapport à une solution optimisée.

**Tableau 1 : formulation des compositions de caoutchouc (en pce)**

| **Composition** | **C1 (invention)** | **C2 (comparatif)** |
|---|---|---|
| NR (1) | 100 | 100 |
| Silice (2) | 45 | 35 |
| Noir de carbone (3) | 4.5 | 3.5 |
| PEG 4000 (4) | 1 | 0 |
| Silane (5) | 4.5 | 3.5 |
| Antioxydant (6) | 1.7 | 1.7 |
| ZnO | 4.5 | 4.5 |
| Acide stéarique | 1 | 1 |
| Soufre | 2.4 | 2.4 |
| Accélérateur (7) | 1.9 | 1.9 |
| HMT (8) | 0.25 | 0.25 |

| | | |
|---|---|---|
| (1) caoutchouc naturel ; (2) silice « Zeosil 1165MP » de Rhodia (BET : 160 m²/g, CTAB : 157 m²/g) (3) noir de carbone N330 apporté sous la forme d'un mélange avec le TESPT selon un ratio massique 1/1 commercialisé sous le nom « X 50-S » par la société Evonik ; (4) polyéthylèneglycol de masse moléculaire 4000 commercialisé sous le nom « Pluriol 4000 » de la société BASF ; (5) TESPT supporté sur du noir de carbone (« X50-S » de la société Evonik) ; (6) N-1,3-diméthylbutyl-N'-phényl-paraphénylènediamine (6-PPD) ; (7) N-cyclohexyl-2-benzothiazyl-sulfénamide (« Santocure CBS » de la société Flexsys) ; (8) Hexaméthylènetétramine de la société Degussa nommé « Methenalink » | | |

**Tableau 2 : performance des pneumatiques**

| **Pneumatique** | **P1** | **P2** |
|---|---|---|
| composition | C1 | C2 |
| taux de silice | 45 | 35 |
| endurance | 150 | 100 |

## Revendications

1. Pneumatique comprenant
- deux bourrelets destinés à entrer en contact avec une jante,
- une armature de carcasse (1) ancrée dans chaque bourrelet à un élément circonférentiel de renforcement (2) de bourrelet,
- chaque bourrelet comportant au moins un insert annulaire interne ,
**caractérisé en ce que** cet insert annulaire interne est constitué d'une composition de caoutchouc comprenant :
o une matrice élastomère à base d'au moins un polyisoprène à majorité d'enchaînement 1,4-cis,
o entre 45 et 60 parties pour cent parties en poids d'élastomère, pce, d'une charge renforçante comprenant de 43 à 55 pce d'une charge inorganique renforçante de surface spécifique BET comprise entre 155 et 185 m²/g, la surface spécifique BET étant déterminée par la norme ISO 4652,
o un agent de couplage pour lier la charge inorganique renforçante à l'élastomère
o et un système de vulcanisation.

2. Pneumatique **selon la revendication 1, caractérisé en ce que** l'insert annulaire interne présente une section méridienne de forme générale allongée et présente des faces se joignant en une pointe ou extrémité qui est située radialement à l'extérieur de l'élément circonférentiel (2) de renforcement de bourrelet.

3. Pneumatique **selon la revendication 1, caractérisé en ce que** l'insert annulaire interne est une gomme de bordure qui est sous forme de ruban et qui est positionnée au contact d'une extrémité d'une armature de renforcement de façon à couvrir cette extrémité.

4. Pneumatique **selon l'une quelconque des revendications 1 à 3, caractérisé en ce que** le taux de la charge renforçante est compris entre 45 et 55 pce.

5. Pneumatique **selon l'une quelconque des revendications 1 à 4 , caractérisé en ce que** le taux de la charge inorganique renforçante est compris dans un domaine allant de 45 à 50 pce.

6. Pneumatique **selon l'une quelconque des revendications 1 à 5, caractérisé en ce que** la surface spécifique BET de la charge inorganique renforçante est comprise dans un domaine allant de 160 à 180 m²/g.

7. Pneumatique **selon l'une quelconque des revendications 1 à 6, caractérisé en ce que** la charge inorganique renforçante est une silice.

8. Pneumatique **selon l'une quelconque des revendications 1 à 7, caractérisé en ce que** la charge renforçante consiste en un mélange de noir de carbone et de silice.

9. Pneumatique **selon la revendication 8, caractérisé en ce que** le noir de carbone est présent à un taux inférieur à 10 pce, préférentiellement inférieur à 6 pce.

10. Pneumatique **selon l'une quelconque des revendications 1 à 9, caractérisé en ce que** la matrice élastomère contient une fraction massique majoritaire de polyisoprène.

11. Pneumatique **selon la revendication 10, caractérisé en ce que** la matrice élastomère contient uniquement du polyisoprène.

12. Pneumatique **selon l'une quelconque des revendications 1 à 11, caractérisé en ce que** le polyisoprène est choisi dans le groupe constitué par le caoutchouc naturel, un polyisoprène de synthèse ayant un taux de liaisons cis-1,4 supérieur à 90% des motifs isoprène, plus préférentiellement encore supérieur à 98%, et le mélange de ces polyisoprènes.

13. Pneumatique **selon l'une quelconque des revendications 1 à 12, caractérisé en ce que** la composition de caoutchouc comprend en outre un agent de recouvrement de la charge inorganique.

14. Pneumatique **selon la revendication 13, caractérisé en ce que** l'agent de recouvrement est choisi dans le groupe constitué par les silanes hydrolysables, les polyols, les polyéthers, les amines, les guanidines, les polyorganosiloxanes hydroxylés ou hydrolysables et leurs mélanges.

15. Pneumatique **selon la revendication 14, caractérisé en ce que** l'agent de recouvrement est un polyol, préférentiellement un polyalkylène glycol, plus préférentiellement un polyéthylène glycol.

16. Pneumatique **selon l'une quelconque des revendications 13 à 15, caractérisé en ce que** l'agent de recouvrement est utilisé à un taux compris entre 0 et 3 pce, préférentiellement entre 0.2 et 3 pce, plus préférentiellement entre 0.5 et 3 pce.

17. Pneumatique **selon l'une quelconque des revendications 1 à 16, caractérisé en ce que** l'agent de couplage est un organosilane au moins bifonctionnel ou un polyorganosiloxane au moins bifonctionnel, de préférence un silane polysulfuré répondant à la formule générale (I) suivante:
(I) Z - A - Sₓ - A - Z ,
dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 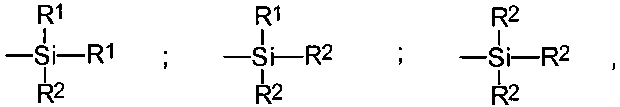 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

## Patentansprüche

1. Reifen, umfassend
- zwei Wülste, die dazu bestimmt sind, mit einer Felge in Kontakt zu kommen,
- eine Karkassenbewehrung (1), die in jeder Wulst mit einem Wulstverstärkungsumfangselement (2) verankert ist,
- wobei jede Wulst mindestens einen inneren ringförmigen Einsatz umfasst,
**dadurch gekennzeichnet, dass** der innere ringförmige Einsatz aus einer Kautschukzusammensetzung besteht, die Folgendes umfasst:
∘ eine Elastomermatrix auf Basis von mindestens einem Polyisopren, das hauptsächlich 1,4-cis-Verknüpfungen aufweist,
∘ zwischen 45 und 60 Teile pro hundert Gewichtsteile Elastomer, phe, eines verstärkenden Füllstoffs, der 43 bis 55 phe eines verstärkenden anorganischen Füllstoffs mit einer spezifischen BET-Oberfläche zwischen 155 und 185 m²/g umfasst, wobei die spezifische BET-Oberfläche gemäß der ISO-Norm 4652 bestimmt wird,
∘ ein Kupplungsmittel zum Verbinden des verstärkenden anorganischen Füllstoffs mit dem Elastomer
∘ und ein Vulkanisationssystem.

2. Reifen nach Anspruch 1, **dadurch gekennzeichnet, dass** der innere ringförmige Einsatz einen Meridianteil mit allgemein langgestreckter Form aufweist und Seiten aufweist, die in einem Punkt oder Ende zusammenlaufen, der bzw. das sich radial auf der Außenseite des Wulstverstärkungsumfangselements (2) befindet.

3. Reifen nach Anspruch 1, **dadurch gekennzeichnet, dass** es sich bei dem inneren ringförmigen Einsatz um eine Gummieinfassung, die in Form eines Bands vorliegt und in Kontakt mit einem Ende einer Verstärkungsbewehrung steht, so dass sie dieses Ende bedeckt, handelt.

4. Reifen nach einem der Ansprüche 1 bis 3, **dadurch gekennzeichnet, dass** der Gehalt des verstärkenden Füllstoffs zwischen 45 und 55 phe liegt.

5. Reifen nach einem der Ansprüche 1 bis 4, **dadurch gekennzeichnet, dass** der Gehalt des verstärkenden anorganischen Füllstoffs in einem Bereich von 45 bis 50 phe liegt.

6. Reifen nach einem der Ansprüche 1 bis 5, **dadurch gekennzeichnet, dass** die spezifische BET-Oberfläche des verstärkenden anorganischen Füllstoffs in einem Bereich von 160 bis 180 m²/g liegt.

7. Reifen nach einem der Ansprüche 1 bis 6, **dadurch gekennzeichnet, dass** es sich bei dem verstärkenden anorganischen Füllstoff um eine Kieselsäure handelt.

8. Reifen nach einem der Ansprüche 1 bis 7, **dadurch gekennzeichnet, dass** der verstärkende Füllstoff aus einer Mischung von Ruß und Kieselsäure besteht.

9. Reifen nach Anspruch 8, **dadurch gekennzeichnet, dass** der Ruß in einem Gehalt von weniger als 10 phe, vorzugsweise weniger als 6 phe, vorliegt.

10. Reifen nach einem der Ansprüche 1 bis 9, **dadurch gekennzeichnet, dass** die Elastomermatrix einen hauptsächlichen Massenanteil an Polyisopren enthält.

11. Reifen nach Anspruch 10, **dadurch gekennzeichnet, dass** die Elastomermatrix lediglich Polyisopren enthält.

12. Reifen nach einem der Ansprüche 1 bis 11, **dadurch gekennzeichnet, dass** das Polyisopren aus der Gruppe bestehend aus Naturkautschuk, einem synthetischen Polyisopren mit einem Gehalt an cis-1,4-Bindungen der Isopren-Einheiten von mehr als 90%, noch weiter bevorzugt mehr als 98%, und der Mischung dieser Polyisoprene ausgewählt ist.

13. Reifen nach einem der Ansprüche 1 bis 12, **dadurch gekennzeichnet, dass** die Kautschukzusammensetzung außerdem ein Beschichtungsmittel für den anorganischen Füllstoff umfasst.

14. Reifen nach Anspruch 13, **dadurch gekennzeichnet, dass** das Beschichtungsmittel aus der Gruppe bestehend aus hydrolysierbaren Silanen, Polyolen, Polyethern, Aminen, Guanidinen, hydroxylierten oder hydrolysierbaren Polyorganosiloxanen und Mischungen davon ausgewählt ist.

15. Reifen nach Anspruch 14, **dadurch gekennzeichnet, dass** es sich bei dem Beschichtungsmittel um ein Polyol, vorzugsweise ein Polyalkylenglykol, weiter bevorzugt ein Polyethylenglykol, handelt.

16. Reifen nach einem der Ansprüche 13 bis 15, **dadurch gekennzeichnet, dass** das Beschichtungsmittel in einem Gehalt zwischen 0 und 3 phe, vorzugsweise zwischen 0,2 und 3 phe, weiter bevorzugt zwischen 0,5 und 3 phe, verwendet wird.

17. Reifen nach einem der Ansprüche 1 bis 16, **dadurch gekennzeichnet, dass** es sich bei dem Kupplungsmittel um ein mindestens bifunktionelles Organosilan oder ein mindestens bifunktionelles Polyorganosiloxan handelt, vorzugsweise um ein Silanpolysulfid der folgenden allgemeinen Formel (I) :
(I) Z-A-Sₓ-A-Z,
in der:
- x für eine ganze Zahl von 2 bis 8 (vorzugsweise von 2 bis 5) steht;
- die Symbole A gleich oder verschieden sind und für einen zweiwertigen Kohlenwasserstoffrest (vorzugsweise eine C₁-C₁₈-Alkylengruppe oder C₆-C₁₂-Arylengruppe, spezieller ein C₁-C₁₀-Alkylen, insbesondere ein C₁-C₄-Alkylen, speziell Propylen) steht;
- die Symbole Z gleich oder verschieden sind und einer der drei nachstehenden Formeln entsprechen: 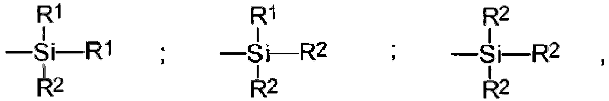 in denen:
- die Reste R¹ substituiert oder unsubstituiert und gleich oder voneinander verschieden sind, für eine C₁-C₁₈-Alkyl-, C₅-C₁₈-Cycloalkyl- oder C₆-C₁₈-Arylgruppe (vorzugsweise C₁-C₆-Alkyl-, Cyclohexyl- oder Phenylgruppen, insbesondere C₁-C₄-Alkylgruppen, spezieller Methyl und/oder Ethyl) stehen;
- die Reste R² substituiert oder unsubstituiert und gleich oder voneinander verschieden sind, für eine C₁-C₁₈-Alkoxy- oder C₅-C₁₈-Cycloalkoxygruppe (vorzugsweise eine Gruppe, die aus C₁-C₈-Alkoxy- und C₅-C₈-Cycloalkoxygruppen ausgewählt ist, noch weiter bevorzugt eine Gruppe, die aus C₁-C₄-Alkoxygruppen, insbesondere Methoxy und Ethoxy, ausgewählt ist) stehen.

## Claims

1. Tyre comprising:
- two beads intended to come into contact with a wheelrim,
- a carcass reinforcement (1) anchored in each bead to a bead reinforcing circumferential element (2),
- each bead comprising at least one internal annular insert,
**characterized in that** this internal annular insert consists of a rubber composition comprising:
o an elastomer matrix based on at least one polyisoprene having a majority of cis-1,4- enchainments,
o between 45 and 60 parts per hundred parts by weight of elastomer, phr, of a reinforcing filler comprising from 43 to 55 phr of a reinforcing inorganic filler with a BET specific surface of between 155 and 185 m²/g, the BET specific surface being determined according to Standard ISO 4652,
o a coupling agent for bonding the reinforcing inorganic filler to the elastomer and
o a vulcanization system.

2. Tyre **according to Claim 1, characterized in that** the internal annular insert exhibits a meridian section of elongated general shape and exhibits faces joining together to give a point or end which is located radially outside the bead reinforcing circumferential element (2).

3. Tyre **according to Claim 1, characterized in that** the internal annular insert is an edge gum which is in the form of a ribbon and which is positioned in contact with an end of a strengthening reinforcement so as to cover this end.

4. Tyre **according to any one of Claims 1 to 3, characterized in that** the content of the reinforcement filler is between 45 and 55 phr.

5. Tyre **according to any one of Claims 1 to 4, characterized in that** the content of the reinforcing inorganic filler is within a range extending from 45 to 50 phr.

6. Tyre **according to any one of Claims 1 to 5, characterized in that** the BET specific surface of the reinforcing inorganic filler is within a range extending from 160 to 180 m²/g.

7. Tyre **according to any one of Claims 1 to 6, characterized in that** the reinforcing inorganic filler is a silica.

8. Tyre **according to any one of Claims 1 to 7, characterized in that** the reinforcing filler consists of a mixture of carbon black and silica.

9. Tyre **according to Claim 8, characterized in that** the carbon black is present at a content of less than 10 phr, preferably of less than 6 phr.

10. Tyre **according to any one of Claims 1 to 9, characterized in that** the elastomer matrix comprises a predominant fraction by weight of polyisoprene.

11. Tyre **according to Claim 10, characterized in that** the elastomer matrix comprises solely polyisoprene.

12. Tyre **according to any one of Claims 1 to 11, characterized in that** the polyisoprene is selected from the group consisting of natural rubber, a synthetic polyisoprene having a content of cis-1,4-bonds of the isoprene units of greater than 90%, more preferably still greater than 98%, and the mixture of these polyisoprenes.

13. Tyre **according to any one of Claims 1 to 12, characterized in that** the rubber composition additionally comprises an agent for covering the inorganic filler.

14. Tyre **according to Claim 13, characterized in that** the covering agent is selected from the group consisting of hydrolysable silanes, polyols, polyethers, amines, guanidines, hydroxylated or hydrolysable polyorganosiloxanes, and their mixtures.

15. Tyre **according to Claim 14, characterized in that** the covering agent is a polyol, preferably a polyalkylene glycol, more preferably a polyethylene glycol.

16. Tyre **according to any one of Claims 13 to 15, characterized in that** the covering agent is used at a content of between 0 and 3 phr, preferably between 0.2 and 3 phr and more preferably between 0.5 and 3 phr.

17. Tyre **according to any one of Claims 1 to 16, characterized in that** the coupling agent is an at least bifunctional organosilane or an at least bifunctional polyorganosiloxane, preferably a silane polysulphide corresponding to the following general formula (I):
Z - A - Sₓ - A - Z, (I)
in which:
- x is an integer from 2 to 8 (preferably from 2 to 5);
- the A symbols, which are identical or different, represent a divalent hydrocarbon radical (preferably a C₁-C₁₈ alkylene group or a C₆-C₁₂ arylene group, more particularly a C₁-C₁₀, in particular C₁-C₄, alkylene, especially propylene);
- the Z symbols, which are identical or different, correspond to one of the three formulae below: 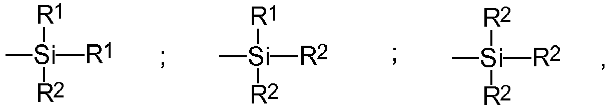 in which:
- the R¹ radicals, which are substituted or unsubstituted and identical to or different from one another, represent a C₁-C₁₈ alkyl, C₅-C₁₈ cycloalkyl or C₆-C₁₈ aryl group (preferably C₁-C₆ alkyl, cyclohexyl or phenyl groups, in particular C₁-C₄ alkyl groups, more particularly methyl and/or ethyl);
- the R² radicals, which are substituted or unsubstituted and identical to or different from one another, represent a C₁-C₁₈ alkoxyl or C₅-C₁₈ cycloalkoxyl group (preferably a group chosen from C₁-C₈ alkoxyls and C₅-C₈ cycloalkoxyls, more preferably still a group chosen from C₁-C₄ alkoxyls, in particular methoxyl and ethoxyl).
